# EUROPÄISCHE PATENTANMELDUNG

(11) **EP 0 833 067 A1**
(43) Veröffentlichungstag der Anmeldung: **01.04.1998**
(21) Anmeldenummer: 96115426.7
(22) Anmeldetag: 26.09.1996
(51) Int. Cl.: F16B 39/12, F16B 31/02

(54) **Nichtdemontierbare Schraubverbindung**

(71) Anmelder: Ortmann, Andreas, 28832 Achim (DE)
(72) Erfinder: Ortmann, Andreas, 28832 Achim (DE)

(57) **Zusammenfassung**

Eine nichtdemontierbare Schraubverbindung, die aus einem männlichen Gewindeteil (12), z.B. Gewindebolzen und zwei weiblichen Gewindeteilen besteht. Das zweite weibliche Gewindeteil, die sogenannte Verschlußmutter (14), hat die Form einer Sechskantmutter.

Das erste weibliche Gewindeteil die Zylindermutter (21) gehört zu der tragenden Gewindeverbindung, welche das Verbindungsmoment hält. Die Verschlußmutter (14) hat den Zweck, die Schraubverbindung zu verschließen und nichtdemontierbar zu machen, und diese bei der Montage anzuziehen.

Das erste weibliche Gewindeteil die Zylindermutter (21) hat eine zylindrische Außenform, um das Ansetzen von Werkzeugen zu verhindern. Bei der Montage wird die Verschlußmutter (14) mit einem Standardschraubenschlüssel angezogen, bis die Schraubverbindung festgezogen ist, d. h. bis das Montagemoment erreicht ist. Hierbei dreht die Verschlußmutter (14) über zwei Greifzähne das erste weibliche Gewindeteil die Zylindermutter (21) mit.

Zum Abschluß der Montage wird die Schraubverbindung verschlossen, indem der Monteur die Verschlußmutter (14) mit dem maximalen Drehmoment beaufschlagt und überdreht. Hierbei wird der Gewindegang und die zwei Greifzähne der Verschlußmutter (14) abgeschert und in den Gewindegang des männlichen Gewindeteils (12), z. B. Gewindebolzen, gepreßt und somit das Gewinde verschlossen, ein Lösen der Schraubverbindung somit unmöglich gemacht.

## Beschreibung

a) Die Erfindung betrifft ein männliches Schraubenteil oder Schraubverbindungen anderer Art mit Gewindebolzen, welche in der Lage sind, sich selbst gegen selbsttätiges Lösen und unerlaubtes Entfernen der Schraubverbindung zu sichern.
   Bei einer derartigen Selbstsicherung wird durch eine Formänderung zwischen Gewindebolzen und Verschlußmutter eine mechanische Sperre in Form eines eingepreßten Kupferspans erzeugt.
b) Es ist gemäß dem PCT-Patent PCT/US 95/05820 bekannt, daß ein Gewindebolzen mit Aussparungen und Mutter mit Projektionsfeder selbstsichernd arbeitet und gegen axialen Druck und Vibrationen selbstsichernd wirkt. Die Schraubverbindung bleibt jedoch bei Anwendung eines größeren Drehmoments demontierbar. Eine Nichtdemontierbarkeit liegt diesem Patent nicht zugrunde.
c) Der Erfindung liegt die Aufgabe zugrunde, eine Schraubverbindung zu erfinden, die in der Lage ist, nichtdemontierbar zu werden und somit den Anwender vor unerlaubter Demontage des Gewindebolzen zu schützen. Somit kann man mit Hilfe einer solchen Schraubverbindung schutzbedürftige Teile oder Baugruppen vor dem unerlaubten Demontieren schützen. Außerdem sollen alle Anforderungen bezüglich des Sicherns bei axialem Zug oder Druck, bei Vibrationen, extremen Temperaturveränderungen der Schraubverbindung gelöst werden. Somit ist selbsttätiges Lösen und Verlieren der Schraubverbindung ausgeschlossen. Diese Aufgabe wird durch die kennzeichnenden Merkmale des Anspruchs 1 gelöst.
   Die Sicherung bzw. der Verschluß der Schraubverbindung wird nicht durch Festsetzen mit Sicherungsstoff oder durch Einrasten der Mutter mittels einer Projektionsfeder erreicht, sondern durch Verschließen des Gewindegangs des Gewindebolzen. Das Verschließen wird dadurch erreicht, daß bei dem Verschlußvorgang von der Verschlußmutter 2½ Gewindegänge abgeschert werden und von dieser selbst in den Gewindegang des Gewindebolzen eingepreßt werden. Damit ist ein Lösen bzw. Demontieren der Schraubverbindung unmöglich geworden.
   Der Versuch, am zylindrischen Bolzenkopf oder an der Zylindermutter Werkzeuge zum Lösen anzubringen, wird außerordentlich erschwert.
   Auch mechanische Einwirkungen, wie in Zeile 33 auf Seite 3 erklärt, werden die tragende Zylindermutter nicht losdrehen, da diese durch Druck von der Verschlußmutter über die Anpaßscheibe (einem Reibschluß) mit dem Gewindegang festsitzt. Auf diese Weise wird das Lösen der Schraubverbindung durch mechanische Einwirkungen verhindert.
   Der Gewindegang der Verschlußmutter ist derart ausgeführt, daß durch eine Längsfräsung im Gewinde, das Abscheren des Gewindes gleichmäßig vorgeht. Die Legierung der Verschlußmutter und Stärke ihrer symmetrischen Greifzähne werden so bemessen, daß das Abscheren des Gewindes und der Greifzähne gleichzeitig passiert. Die Kupferlegierung muß so gewählt werden, daß die Verschlußmutter gute Kaltverformungseigenschaften aufweist. Die Legierung darf nicht spröde sein, sondern muß zäh aber weich sein. Das Gewinde der Verschlußmutter ist 2½ Umdrehungen lang. Die Gewinde der beiden weiblichen Gewindeteile sind wie die des Gewindebolzen metrisch und mit identischer Steigung.
   Die Anpaßscheibe gleicht die Differenz zwischen Zylindermutter und Verschlußmutter aus. Die Druckfestigkeit der Scheibe muß 10 x kleiner sein als die der Verschlußmutter. Die Schraubverbindung ist für Schlüsselweiten von SW10 bis SW21 gedacht und darauf beschränkt.
d) Kurzbeschreibung der Zeichnungen:

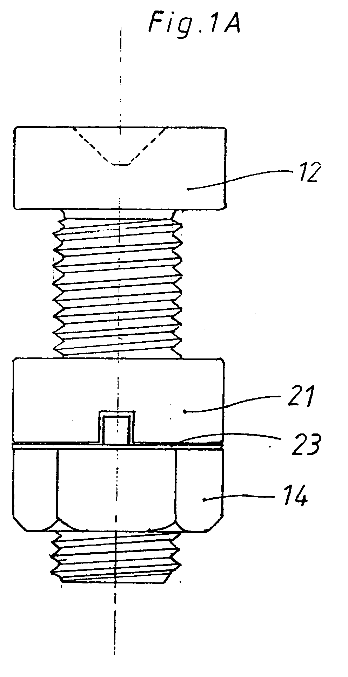

   **Fig. 1A: zeigt die nicht eingebaute Schraubverbindung mit allen Bestandteilen, (12), (14), (21), (23), im zusammengebauten Zustand.**

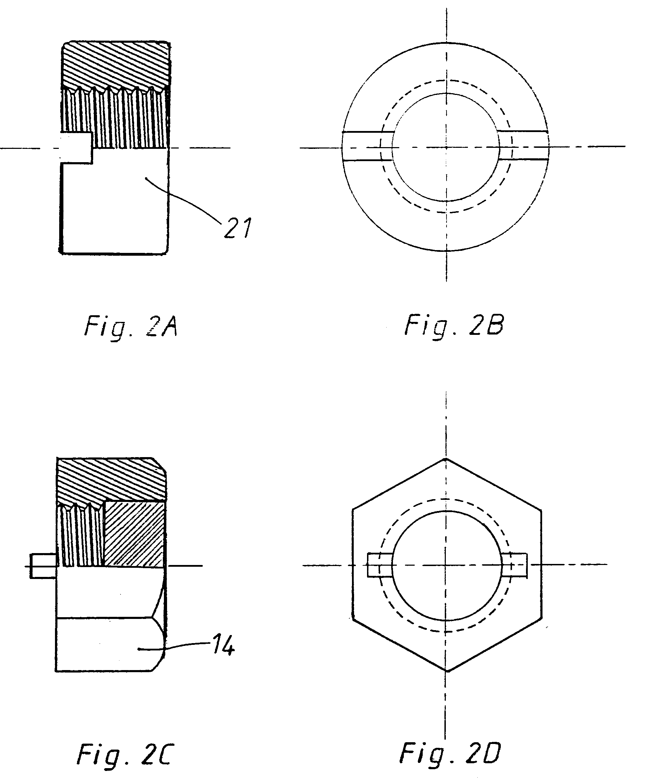

   **Fig. 2A: zeigt die Zylindermutter (21) in Schnittdarstellung. Im Zeichnungsschnitt ist zu beachten, daß die Gewindeeingänge nicht gesenkt sind.**
   **Fig. 2B: zeigt die Zylindermutter (21) in der Seitenansicht. Die symmetrischen Aussparungen für die Nuten der Verschlußmutter sind in der Darstellung zu sehen.**
   **Fig. 2C: zeigt die Verschlußmutter (14) in der Schnittdarstellung. Die Ausführung des Gewindedurchgangs ist im Detail dargestellt. Im Zeichnungsschnitt ist zu erkennen, daß das Gewinde nur 2½ Gewindeumdrehungen lang ist, wobei der zweite Teil des Gewindedurchgangs den Außendurchmesser des Gewindes aufweist.**
   **Fig. 2D: zeigt die Verschlußmutter (14) in der Seitenansicht.**

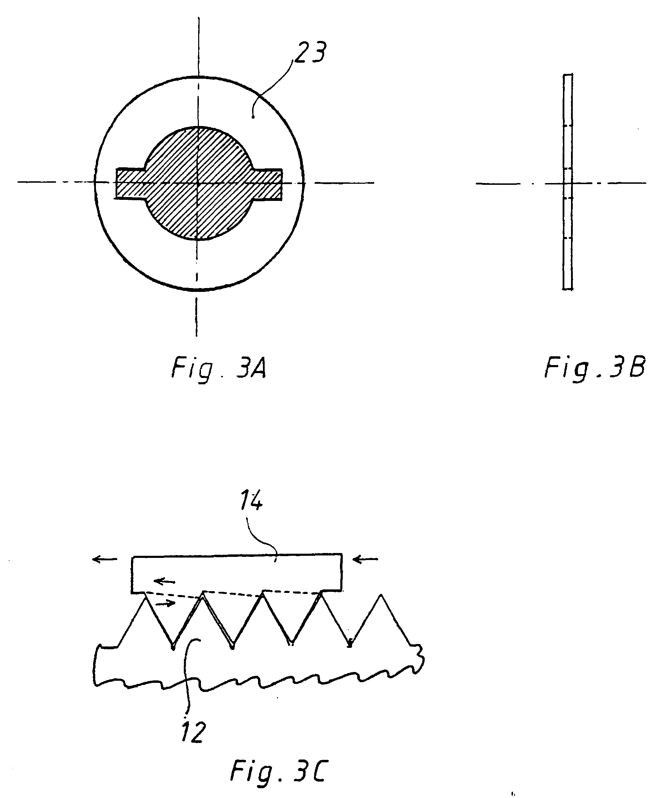

   **Fig. 3A: zeigt die Anpaßscheibe (23).**
   **Fig. 3B: zeigt die Anpaßscheibe (23) in der Seitenansicht.**
   **Fig. 3C: zeigt eine Detailansicht der Schraubverbindung im Gewinde. Es handelt sich um eine Darstellung der Bolzenschraube (12) mit der Verschlußmutter (14), während die Schraubverbindung verschlossen wird.**
f) Die Möglichkeit der gewerblichen Anwendung kann in vielen Bereichen liegen, z.B. Fahrzeugbau, Maschinenbau, Schiffbau, Bahntechnik, Hochbau. Die nichtdemontierbare Schraubverbindung kann speziell in der Fahrzeugtechnik gut genutzt werden. Für die hochwertigen Teile wie Katalysatoren Rußfilter und Aufbauten ist ein Demontageschutz oftmals zweckmäßig.
   In der Bahntechnik bei Gleisanlagen, Oberleitungsbauten, kann eine solche Schraubverbindung sicherheitsrelevante Zwecke erfüllen. Außerdem besteht ein weiterer Vorteil dieser Schraubverbindung in seiner leichten Anwendbarkeit und unkomplizierten Konstruktion. Dadurch wird diese Schraubverbindung kostengünstig in der Herstellung und Montage sein.

## Patentansprüche

1. Nichtdemontierbare und selbstsichernde Schraubverbindung, dadurch gekennzeichnet, daß eine Verschlußmutter (14) das Gewinde des männlichen Gewindeteils (12) verschließen kann, damit die Schraubverbindung nicht mehr demontiert werden kann. Die Schraubverbindung kann nur zerstört werden, um sie zu entfernen. Die Neuerung basiert auf einer Kombination von zwei weiblichen Gewindemuttern, welche derart sind, daß eine Verschlußmutter (14) über zwei Greifzähne in die Aussparung der Zylindermutter (21) greift, und somit diese bei der Montage anzieht.
Nach dem Abschluß der Montage, dem Verschluß, sind Gewindegang und Greifzähne der Verschlußmutter (14) abgeschert. Der abgescherte Gewindegang der Verschlußmutter (14) wird in das Gewinde des männlichen Gewindeteils (12) gepreßt.

2. Nichtdemontierbare und selbstsichernde Schraubverbindung nach Anspruch 1, die dem Demontageschutz, Sabotageschutz bzw. dem Diebstahlschutz von hochwertigen Baugruppen, Teilen aller Art, speziell in der Fahrzeugtechnik, dient.

3. Nichtdemontierbare und selbstsichernde Schraubverbindung nach Anspruch 1, die dadurch gekennzeichnet ist, daß die Schraubverbindung im ersten Arbeitsgang montiert wird, wobei die Verbindung mechanisch fertiggestellt ist, aber noch nicht verschlossen ist. Erst im zweiten Arbeitsgang wird durch das Überdrehen der Verschlußmutter (14) die Schraubverbindung verschlossen.

4. Nichtdemontierbare und selbstsichernde Schraubverbindung nach Anspruch 1, die dadurch gekennzeichnet ist, daß das befugte Entfernen der Schraubverbindung am Kopf des männlichen Schraubenteils (12) möglich ist. Durch eine konische Senkung kann der Schraubenkopf abgebohrt werden, wodurch sich die Schraube entfernen läßt.

5. Nichtdemontierbare und selbstsichernde Schraubverbindung nach Anspruch 1, bestehend aus einem männlichen Schraubenteil (12) und dem ersten weiblichen Gewindeteil der Zylindermutter (21) mit symmetrischer Aussparung, desweiteren einer komprimierbaren Anpaßscheibe (23) und dem zweiten weiblichen Gewindeteil der Verschlußmutter (14) mit zwei symmetrischen Greifzähnen.

6. Nichtdemontierbare und selbstsichernde Schraubverbindung nach Anspruch 1, gekennzeichnet durch dieTeile: (12) aus Material: galvanisch oberflächenveredelter Stahl, (21) aus Material: vernickelter Stahl, (23) aus Material: Teflon, (14) aus Material: speziallegiertem Kupfer.

7. Nichtdemontierbare und selbstsichernde Schraubverbindung nach Anspruch 1, dadurch gekennzeichnet,daß das männliche Schraubenteil (12) wie in der Zeichnung ein Gewindebolzen sein kann oder bei anderen Anordnungen als Stehbolzen, Gewindestange oder Achse mit Gewindeende ausgeführt ist.

8. Nichtdemontierbare und selbstsichernde Schraubverbindung nach Anspruch 1 und 2, die dadurch gekennzeichnet ist, daß die Mutter (21), welche die Schraubverbindung trägt, eine zylindrische Außenform aufweist. Damit wird ein Ansetzen eines größeren Drehmoments mittels Werkzeug, zum Lösen der Schraubverbindung, verhindert.
